Europäisches Patentamt

European Patent Office

Office européen des brevets

(19)

(11) Publication number: **0 195 353**
**A2**

(12) **EUROPEAN PATENT APPLICATION**

(21) Application number: **86103240.7**

(22) Date of filing: **10.03.86**

(51) Int. Cl.⁴: **D 01 F 9/08**

(30) Priority: **20.03.85 US 714138**

(43) Date of publication of application:
**24.09.86 Bulletin 86/39**

(84) Designated Contracting States:
**AT BE CH DE FR GB IT LI NL SE**

(71) Applicant: **AMERICAN CYANAMID COMPANY**
**1937 West Main Street P.O. Box 60**
**Stamford Connecticut 06904(US)**

(72) Inventor: **Card, Roger John**
**217 Bridge Street, D2**
**Stamford Connecticut(US)**

(74) Representative: **Wächtershäuser, Günter, Dr.**
**Tal 29**
**D-8000 München 2(DE)**

(54) **Hollow ceramic fibers.**

(57) Hollow metal oxide, nitride, carbide and boride fibers,
hollow metal fibers and methods for the production thereof,
wherein the fibers are of an outer diameter of less than about
50 microns, are disclosed.

EP 0 195 353 A2

Croydon Printing Company Ltd.

9,977

# HOLLOW CERAMIC FIBERS

## BACKGROUND OF THE INVENTION

The production of solid or tubular metal and metal oxide, carbide, nitride and boride fibers is becoming increasingly important. These fibers are utilized as dielectric or heat insulators, fuel elements, heat shields, ablation reinforcement materials, plastic reinforcers, filters, furnace liners, pyrometer protection conduits, fuel elements and the like.

Originally, these fibrous materials were produced by drawing the fibers from the molten state, cooling, devitrifying and crystallizing. Subsequently, fibrous materials were produced by impregnating a preformed organic polymeric material with the metal and heating the impregnated material to carbonize and oxidize the polymer and convert the metal to a metal oxide, see U.S. Patent No. 3385915. Heating the metal oxide article in the presence of a reducing agent at an elevated temperature resulted in the production of elemental metal fibers, see U.S. Patent No. 3406025. Interlocked fibers, U.S. Patent No. 3663182; fibrous zirconia, U.S. Patent Nos. 3860529; 3861947, microcrystalline fabric, U.S. Patent No. 4162301 were produced in the same manner. The organic polymeric material utilized in these prior art systems was generally cellulose acetate, cotton, wool, silk, acrylics, polyesters, vinyls, polyurethanes, polyolefins and the like. The preferred material used was usually a polyester or viscose.

The production of hollow metal fibers is taught in U.S. Patent Nos. 4175153; 4222977 and 4104445. These fibers are prepared by incorporating metal oxides, halides, hydroxides, carbonates, oxalates, acetates etc. into a polymeric solution extruding the resultant material into a hollow fiber, treating the resultant fiber to remove the polymer and sintering the remaining material. These hollow fibers are said to be greater than about 50 microns in outside diameter and are governed primarily by the size of the hollow fiber which is extrudable from the salt containing polymer solution. Very thin fibers, i.e. those having an outside diameter of below 50 microns are therefore not disclosed therein.

Recently, the use of polyacrylonitrile and polyvinyl alcohol impregnating media has evolved, see EPO Applications 123,529A and 123,530A.

While the use of these materials for impregnation with the metal salts has resulted in the production of interesting and useful metal structures, they have not enabled the production of hollow, small diameter fibers because the use of polyesters etc. necessitates the preswelling of the material before it absorbs sufficient metal salt in its pores to enable the formation of a self-sustaining article once the polyester is removed during heat treatment. Unless the polyester is preswollen, it will not absorb sufficient metal salt to produce a structure which exhibits the strength necessary for the ultimate use for which it is intended. Additionally, the polyester must be first formed into the shape that is required of the ultimate article. However, even when the polyester is preswollen and shaped into hollow fibers it has not been possible to obtain hollow fibers having outside diameters of 50 microns or less.

## SUMMARY OF THE INVENTION

It has now been found that hollow, thin fibers can be prepared having outside diameters of less than 50 microns whereby it is not necessary to preswell the polymeric material before impregnation thereof with the metal salts or to extrude a hollow fiber beforehand. In accordance with the present invention, oxide, nitride, carbide and boride fibers can be produced which are chemically uniform. The small diameter fibers allow the manufacture of more sensitive transducers and result in weight savings when compared to solid or larger diameter ceramic fibers.

## DESCRIPTION OF THE INVENTION
## INCLUDING PREFERRED EMBODIMENTS

The present invention relates to hollow metal oxide, boride, carbide or nitride fibers having an outer fiber diameter of less than about 50 microns. Also, the present invention relates to such fibers in the form of elemental metal.

The novel fibers are produced by:

a) immersing a carbon fiber capable of absorbing at least twice its weight in liquid, in a solution of a metal salt or complex capable of being calcined to its oxide or converted to its nitride, carbide or boride for from about 10 minutes to about 36 hours and at a pH ranging from about 3 to about 10, to thereby impregnate the fiber with salt or complex,

b) drying the resultant, impregnated fiber,

c) calcining or converting the dried, impregnated fiber to transform the salt to its corresponding oxide, carbide, nitride or boride and

d) recovering the resultant, hollow metal oxide, carbide, nitride or boride fiber.

4

When the desired recovered fiber is to be in its elemental metal form, the fiber produced as described above is reduced after transformation but before recovery thereof.

The novel fibers of the present invention are made possible by the use of a carbon fiber capable of absorbing at least twice its weight in liquid as the impregnated matrix. These carbon fibers are well known in the art and generally comprise activated or oxidized carbon fibers which can be prepared from any known carbon fiber precursor such as acrylonitrile polymers and copolymers, cellulosics, etc. They are prepared by treating carbon fibers as taught in the art, such as by 1) treating with a mixture of steam and nitrogen at 900°C (Y. Tamuro et al, Japan Kokai, 74, 116,322, 1973) or 2) treating with carbon dioxide at about 900°C (D.J. Thorne et al, Fiber Sci. Tech. 1971, Issue No. 4. pg. 9). Treating carbon fibers produced from cellulose with carbon dioxide at 900°C is taught by Arons et al, Text. Res. J. Vol. 43 (9), 539, 1973.

As mentioned above, useful carbon fibers must be capable of absorbing at least twice their weight of the solution of the metal salt or complex, preferably at least three (3) times their weight.

The metal salts or complexes useful in the present invention are those capable of being calcined to their oxides or converted to their nitrides, carbides or borides. Suitable metal salts include the alkoxides, halides, carbonates, sulfates, carboxylates etc., of such metals as beryllium, magnesium, calcium, barium, strontium, yttrium, lanthanum, cerium, titanium, zirconium, hafnium, vanadium, niobium, tantalum, chromium, molybdenum, tungsten, manganese, iron, cobalt, nickel, copper, zinc, cadmium, boron, aluminum, gallium, gadolinium, silicon, tin, lead, thorium, uranium, plutonium, palladium, platinum, rhodium, iridium, etc. Preferred metals are titanium, tin, zirconium, yttrium, lead, niobium, gallium, gadolinium, nickel, magnesium, calcium, aluminum, silicon and boron.

Examples of useful complexes are the acetoacetonates, carbonyls, nitrosyls, cyclopentadienyls etc. of the above metals. Mixtures of salts, complexes or salts and complexes may also be used.

The metal salts or complexes are impregnated into the carbon fiber by immersing the fiber in a solution thereof. Aqueous solutions of the salts or complexes are preferred, however, solvent solutions thereof may be employed if desired (or if necessary) as long as the solvent is compatible with both the metal salt and the fiber. Suitable solvents include tetrahydrofuran, dimethyl sulfoxide, butyl acetate, methyl ethyl ketones, alcohols, aniline, meta-cresol, and the like. If the salts per se are liquid, no solvent need be used. Concentrations of salt and complex may range from about 10% to 90%, by weight.

Once immersed, impregnation of the carbon fiber is generally complete within about 10 minutes to 36 hours, preferably about 30 minutes to 24 hours. While one immersion is generally sufficient to impregnate the carbon fiber with enough salt to enable the recovery of a satisfactory hollow fiber, it is oftentimes desired to dry the impregnated carbon fiber and then conduct a second or more impregnations in order to incorporate more metal salt or complex into the fiber and thereby produce a larger diameter fiber having thicker sidewalls.

The pH is adjusted during the impregnation so as to enhance the procedure, with a pH ranging from about 3 to about 10, preferably from about 5 to about 8, being usual. Any known pH adjuster can be used for this purpose such as ammonium hydroxide, citric acid and the like.

After impregnation is complete, the resultant impregnated fiber is dried. Any procedure may be used to dry the impregnated fiber such as filtering, hot air etc. Standing at room temperature is also sufficient.

Once the fiber is impregnated to the desired extent and dried, it is then either calcined to oxidize the carbon fiber to thereby remove it from the metal salt as a gas and to convert the metal salt to its corresponding oxide or otherwise treated to form the carbide, nitride or boride. The temperature of carbonization (calcination) should be sufficiently high to oxidize the carbon fiber and the salt but low enough so as not to detrimentally effect the salt. Temperatures ranging from about 200-900°C may be employed with 350-800°C, being preferred. Sufficient time is allowed to complete decomposition of the carbon fiber and conversion of the salt to the oxide, i.e. usually 1-5 hours.

To form the carbide, nitride or boride, the impregnated carbon fiber is treated at 900°C-2000°C, preferably over 1000°C, in the presence of a suitable additive. The nitrides are produced by treating in the presence of ammonia, hydrazine (i.e. a nitrogen source), the carbides are produced by treating in the presence of a carbon source e.g. carbon monoxide, methane, ethane etc. and the boride is produced by treating in the presence of a boron carrier e.g. diborane etc. The carbon fiber is again removed due to the temperature employed during these treatments.

Once calcined or otherwise treated, the hollow, metal oxide, carbide, nitride or boride fiber resulting may be recovered and used as such or further treated such as by reduction with hydrogen to form the elemental metal. The reduction is conducted at a temperature of about 400°C to about 1000°C with above about 450°C being preferred.

Sintering before or after reduction of the hollow fibers may be accomplished by heating at 800-2000°C, preferably over 1000°C and more desirably over 900°C to strengthen the fiber. The carbon fibers may be employed in the novel procedure of the present invention as fibers per se or as non-woven fibers i.e. matted felts, fabrics etc., or as woven fabrics, knits, braids or the like.

As discussed above, mixtures of the metal salts and/or complexes may be used as solutions to be impregnated into the activated or oxidized carbon fiber in accordance with the present invention. When mixtures are employed, any desired ratio of one and the other may be used. Different metal salts and/or complexes may also be impregnated into the carbon fiber sequentially. Preferred mixtures include zirconium and at least one of yttrium, calcium and magnesium. Barium titanate is also preferred. Other preferred mixtures include (a) lead, zirconium, and titanium; (b) lead, zirconium, titanium and niobium; (c) gallium and gadolinium; and the like.

The hollow fibers produced in accordance with this invention have an outer diameter of less than about 50 microns, preferably less than about 10 microns, and can possess an outer diameter as small as 1-2 microns. Wall thickness may range from about 0.05-20 microns, preferably 0.1 to 10 microns, with a minimum inner diameter of about 1 micron.

The process of this invention may be conducted on a batch or continuous basis i.e. using cut carbon fibers as such or drawing a carbon fiber from a spool as such and through the various stages of the process i.e. impregnation, drying, calcination etc.

The following examples are set forth for purposes of illustration only and are not to be construed as limitations on the present invention except as set forth in the appended claims. All parts and percentages are by weight unless otherwise specified.

## EXAMPLE 1

Ammonium hydroxide is added to a 50% aqueous solution of citric acid (by weight) until the pH of the solution reaches 6. This solution is heated to 60-70°C and maintained at 60-70°C during the addition of titanium butoxide. The molar ratio is two equivalents of citric acid to one equivalent of titanium butoxide. Water is slowly added to obtain a clear homogeneous solution at room temperature. Activated carbon fiber is added to this solution in a quantity to absorb 85 percent of the titanium containing solution. After standing for 12 hours, the supernatant solution is removed by filtration. The resulting fiber is dried at 100°C for 3 hours. The product is calcined in air at 600°C for two hours. The resulting product is recovered in the form of white, hollow fibers. An analysis of the fibers shows them to be titania with a fiber outer diameter of 2-4 microns and a typical fiber length exceeding 500 microns. The fibers have a wall thickness of .1 to .5 microns. The titania is present as a mixture of anatase and rutile phases. The fiber fractures under pressure to form shorter fibers rather than a powder.

## EXAMPLE 2

Activated carbon fibers are added to titanium butoxide. Excess titanium butoxide is removed by filtration. The wetted fibers are allowed to stand in air for more than two hours. The product is calcined in air at 750°C for two (2) hours. Hollow titania fibers are obtained which are very similar to those of Example 1.

## EXAMPLE 3

Activated carbon fibers are added to an excess of a saturated aqueous solution of stannous chloride. After twenty hours the excess solvent is removed by filtration. The fibers are dried at 110°C. Calcination in air at 700°C for two (2) hours results in the formation of hollow fibers of tin oxide, 2-5 microns in outer diameter.

## EXAMPLE 4

Citric acid (170 parts) is dissolved in 170ml water. Titanium butoxide (170 parts) and then 1.2L water are added. The solution is heated to 60-70°C and the pH is adjusted to about 6 by addition of ammonium hydroxide. The resulting upper butanol layer is removed. The resultant aqueous solution is designated Solution A.

Barium carbonate (99 parts) and 335parts of 88% formic acid are added to 600ml water. The pH is adjusted to 6 by addition of ammonium hydroxide. This solution is designated as Solution B. Solution B is added to Solution A and stirred for 30 minutes.

Activated carbon fiber is added to an excess of the resultant barium and titanium containing solution. After several hours the excess solution is removed by filtration. The fibers are dried and then calcined at 750°C for two (2) hours. An analysis of the resultant hollow fibers obtained shows them to be comprized of barium titanate. The ratio of barium to titanium in the fiber is 1:1. The yield of barium titanate is 0.5 per part of initial activated carbon fiber. The physical dimensions of the hollow fibers are similar to those of Example 1.

## EXAMPLE 5

Following the general steps of the procedure of Example 4, hollow barium titanate fiber is obtained using commercially available oxidized carbon fiber instead of activated carbon fiber. The yield of barium titanate is 0.2 part per part of oxidized carbon fibers. The hollow product is otherwise essentially identical to that of Example 4.

## EXAMPLE 6

Activated carbon fibers are added to an excess of a saturated aqueous solution of nickel sulfate. After four (4) hours the excess solution is removed by filtration. The fibers are dried and then calcined at 750°C in air for two (2) hours to produce white, hollow fibers identified as nickel oxide of 2-6 microns outer diameter.

One application of this material is as a precursor for the preparation of metal fibers as illustrated in Example 7.

## EXAMPLE 7

The hollow, nickel oxide fibers produced in Example 6 are reduced with hydrogen at 750°C to produce a grey, hollow fiber product. An analysis shows the fibers to be metallic nickel.

## EXAMPLES 8 - 12

Activated carbon fiber or oxidized carbon fiber is added to an excess of an aqueous solution of zirconyl chloride. After several hours the excess solvent is removed by filtration and the fibers are dried and then calcined at 750°C in air for two (2) hours. White, hollow fibers are obtained. An analysis shows the fibers to be zirconia. The physical dimensions of the fiber are nearly identical to those in Example 1. The yield of fibers depends on both the concentration of the zirconyl chloride and the type of carbon fibers. The results are set forth in Table 1, below.

## TABLE 1

| EXAMPLE NO | CARBON FIBER | CONCENTRATION OF ZIRCONYL CHLORIDE (Moles/Liter) | YIELD (Parts $ZrO_2$/Parts C) |
|---|---|---|---|
| 8 | Activated | 2.4 | 0.8 |
| 9 | Activated | 1.2 | 0.4 |
| 10 | Activated | 0.24 | 0.1 |
| 11 | Oxidized | 2.4 | 0.3 |
| 12 | Oxidized | 1.2 | 0.1 |

## EXAMPLES 13 - 14

Following the general steps of Example 8, hollow zirconia fibers of similar size are prepared from zirconium sulfate and activated carbon fibers and oxidized carbon fibers. The yield of zirconia fibers from activated carbon fibers and 1.9M zirconium sulfate is 0.6 part zirconia per part carbon fiber. The yield of zirconia fibers from oxidized carbon fibers and 1.9M zirconium sulfate is 0.1 part zirconia per part carbon fibers.

## EXAMPLE 15

Activated carbon fiber is added to an excess of a saturated aqueous solution of yttrium sulfate and zirconium sulfate which are present in a molar ratio of 5 equivalents yttrium sulfate to 95 equivalents zirconium sulfate. After several hours the excess solvent is removed by filtration. The fibers are dried and then calcined at 750°C in air for two (2) hours. The product is a white, hollow fiber of 2-4 microns outer diameter. An analysis shows that the fiber contains 1.8 molar percent yttria with the remainder being zirconia. Yttria is found to be distributed uniformly on a fiber by fiber basis and on a spot-to-spot basis throughout individual fibers.

## EXAMPLE 16

By following the procedure described in Example 15, but using calcium chloride in place of yttrium sulfate and oxidized carbon fibers, there is provided calcia stabilized hollow, zirconia fibers containing five (5) mole percent calcia and having an outer diameter of about 3 microns. The yield of calcia stabilized zirconia fibers is 0.2 parts ceramic fiber per part carbon fiber.

13

## EXAMPLE 17

By following the procedure described in Example 15, but using magnesium chloride in place of yttrium sulfate there is provided magnesia stabilized zirconia hollow fibers.

## EXAMPLE 18

Bis(cyclopentadienyl)titanium dichloride is dissolved in tetrahydrofuran. Activated carbon fiber is added to excess saturated tetrahydrofuran solution. After one hour the excess solution is removed by filtration. The fibers are dried at reduced pressure and then calcined at 750°C for two hours in air. Hollow titania fibers are obtained.

## EXAMPLE 19

Titanium dioxide fibers, prepared as in Example 1, are placed in an oven at room temperature. The oven chamber containing the titania fibers is purged with nitrogen and then ammonia is introduced. The fibers are heated to 1500°C in the presence of ammonia. After two hours at 1500°C the fibers are allowed to cool to room temperature. Hollow titanium nitride fibers are obtained.

## EXAMPLE 20

In a manner similar to Example 19, titania fibers are exposed to methane at 2000°C. Hollow titanium carbide fibers are obtained.

## EXAMPLE 21

In a manner similar to Example 19, titania fibers are exposed to diborane diluted in argon at 1750°C. Hollow titanium boride fibers are obtained.

## EXAMPLE 22

The procedure of Example 1 is again followed except that the activated carbon fiber is impregnated and dried twice additionally to increase the amount of salt taken up. The resultant hollow fibers have an outside diameter of 10 microns.

EXAMPLE 23

Zirconium citrate solution was prepared by the addition of 200 g (0.8 mol) zirconyl chloride tetrahydrate to an aqueous solution containing 175 g(0.83 mol) citric acid in 150 ml aqueous ammonia. The pH was maintained at ~6 throughout the addition by intermittent addition of ammonium hydroxide. The solution was filtered to yield ~ 0.5 L filtrate which was determined to be 1.0 M in zirconium by D.C. Plasma analysis.

Titanium citrate solution was prepared in an analogous manner from 250 mL (0.73 mol) titanium butoxide and 250 g (1.2 mol) citric acid at pH ~6. The butanol was removed and the aqueous solution filtered to yield 0.6 L of solution 1.0 M in titanium.

Lead citrate solution was prepared in an analogous reaction of 308 g (1.37 mol) lead oxide and 430 g (2 mol) citric acid at pH 9. Filtration resulted in 1.2 L of a solution which was 1.18 M in lead. This solution was of limited stability to storage.

Lead Zirconate Titanate (PZT) fibers were prepared from the above solutions and activated carbon fibers. Lead citrate solution (424 mL, 0.5 moles Pb) was added to 265 mL zirconium citrate (0.265 moles Zr) and 221 mL titanium citrate (0.229 moles Ti) solutions. Activated carbon fibers (50 g) were allowed to soak in an excess of the mixed citrate solution overnight. Excess solution was removed by filtration and the fibers were dried at 110°C for 3 hrs. The resulting product weighed 112 g which was analyzed by D.C. Plasma and contains Pb, Zr and Ti in a mole ratio 1.3:0.55:0.45. The ratio of elements in the fibers is controlled by the ratio of metal citrates used. The fibers were calcined (550°C, 2 hrs) and sintered (1200°C, 2 hrs).

## EXAMPLE 24

PZT fibers were prepared, unless otherwise indicated, following the procedure of Example 23. Activated carbon fibers (115g) were allowed to soak in 0.76L citrate solution containing 250 mmol lead, 127 mmol zirconium, 117 mmol titanium and 14 mmol niobium. The fibers were filtered and dried for 16 hours at 110°C to yield 350g fibers. The fibers were calcined (550°C, 2 hrs) and sintered (1200°C, 2 hrs) to yield PZT fibers with a zirconium to titanium ratio of 52 to 48.

## EXAMPLE 25

Gallium Gadolinium Garnet Fibers ($Gd_3Ga_5O_{12}$) were prepared as follows. Activated carbon fibers were added to a solution of 10.45g (25 mmol) gallium nitrate hydrate, 6.77g (15 mmol) gadolinium nitrate hydrate and 10 ml water. The excess solution was removed by filtration and the fibers dried at 110°C for 2 hours. Calcination at 750°C followed by sintering at 1500°C yielded white fibers with a gadolinium to gallium weight ratio of 1.21 (This ratio can be varied by varying the ratio of starting materials). The formation of $Gd_3Ga_5O_{12}$ was shown by X-ray diffraction analysis.

CLAIMS

1.    A hollow metal oxide, carbide, nitride or boride
fiber, or a hollow metal fiber, having a fiber outer
diameter of less than about 50 microns.

2.    A fiber according to Claim 1 or a method of Claim
3 or 4 wherein the metal is titanium, tin, zirconium,
yttrium, nickel or calcium.

3.    A method for producing the hollow metal oxide,
carbide, nitride or boride fiber of Claim 1 comprising:

a)    immersing a carbon fiber capable of absorbing at
least twice its weight in liquid in a solution of a
metal salt capable of being calcined to its oxide or
converted to its carbide, nitride or boride, for from
about 10 minutes to about 36 hours and at a pH ranging
from about 3 to about 10, to thereby impregnate the
carbon fiber with salt,

b)    drying the resultant, impregnated carbon fiber,

c)    calcining or converting the dried, impregnated
fiber to transform the salt to its corresponding oxide,
carbide, nitride or boride and remove the carbon fiber,
and

d)    recovering the resultant hollow fiber.

4.    A method of producing the hollow metal fiber of
Claim 1 comprising:

a)    immersing a carbon fiber capable of absorbing at
least twice its weight in liquid in a solution of a
metal salt capable of being calcined to its oxide or
converted to its carbide, nitride or boride, for from
about 10 minutes to about 36 hours and at a pH ranging
from about 3 to about 10, to thereby impregnate the
carbin fiber with salt,

b)    drying the resultant, impregnated carbon fiber,

c)    calcining or converting the dried, impregnated
fiber to transform the salt to its corresponding oxide,
carbide, nitride or boride and remove the carbon fiber,

d)    reducing the so-formed, calcined or converted fiber and

e)    recovering the resultant hollow metal fiber.

5.    A method of Claim 3 or 4 wherein the carbon fiber is activated carbon fiber.

6.    A method of Claim 3 or 4 wherein the carbon fiber is oxidized carbon fiber.

7.    A hollow metal oxide, carbide, nitride or boride fiber of Claim 1, or a method of Claim 3, wherein the metal is a mixture of zirconium and at least one of yttrium, calcium and magnesium, or wherein the metal is barium titanate.

8.    A hollow metal oxide, carbide, nitride or boride fiber of Claim 1 or a method of Claim 3 wherein the metal is a mixture of metals.

9.    A fiber or method of Claim 8 with the mixture comprising metals selected from the group consisting of: beryllium, magnesium, calcium, barium, strontium, yttrium, lanthanium, cerium, titanium, zirconium, hafnium, vanadium, niobium, tantalum, chromium, molybdenum, tungsten, manganese, iron, cobalt, nickel, copper, zinc, cadmium, boron, aluminum, gallium, gadolinium, silicon, tin, lead, thorium, uranium, plutonium, palladium, platinum, rhodium, and iridium.

10.    A fiber or method of Claim 9 with the mixture comprising (a) lead, zirconium, and titanium; (b) lead, zirconium, titanium, and niobium; or (c) gallium and gadolinium.

11.    A hollow metal fiber of Claim 1 or a method of Claim 4 wherein the metal is a mixture of metals.

12.    A fiber or method of Claim 11 with the mixture comprising metals selected from the group consisting of: beryllium, calcium, barium, strontium, yttrium, lanthanium, cerium, titanium, zirconium, hafnium, vanadium, niobium, tantalum, chromium, molybdenum, tungsten, manganese, iron, cobalt, nickel, copper, zinc, cadmium, aluminum, gallium, gadolinium, silicon, tin, lead, thorium, uranium, plutonium, palladium, platinum, rhodium, and iridium.